Europäisches Patentamt

European Patent Office

Office européen des brevets

(19)

(11) Publication number: **0 339 910**
**A1**

# EUROPEAN PATENT APPLICATION

(12)

(21) Application number: **89304064.2**

(22) Date of filing: **24.04.89**

(51) Int. Cl.⁴: **C08K 9/08 , C08K 7/06 , C08L 59/02**

(30) Priority: **25.04.88 JP 102094/88**

(43) Date of publication of application:
**02.11.89 Bulletin 89/44**

(84) Designated Contracting States:
**AT BE CH DE ES FR GB GR IT LI LU NL SE**

(71) Applicant: **POLYPLASTICS CO. LTD.**
**3-13, Azuchi-machi 2-chome**
**Chuo-Ku Osaka-shi(JP)**

(72) Inventor: **Minamisawa, Tsuyoshi**
**36-6, Kamo**
**Mishima-shi Shizuoka(JP)**
Inventor: **Mitsuuchi, Masamichi**
**885-11, Miyajima**
**Fuji-shi Shizuoka(JP)**
Inventor: **Kitamura, Hiroshi**
**2272-2, Imaizumi**
**Fuji-shi Shizuoka(JP)**

(74) Representative: **Jackson, Peter et al**
**HYDE, HEIDE & O'DONNELL 146 Buckingham**
**Palace Road**
**London SW1W 9TR(GB)**

(54) Polyoxymethylene resin composition and process for the preparation thereof.

(57) A polyoxymethylene composition comprises (A) polyoxymethylene,(B-1) 1 to 60 percent by weight of carbon fiber and (B-2) 0.1 to 15 percent by weight, based on the carbon fiber, of a polyurethane, optionally comprising (C) up to 50 percent by weight of an inorganic filler other than carbon fiber, the total amount of (B-1), (B-2) and (C) being not more than 70 percent by weight. Before mixing the components, the carbon fiber may be treated with a polyurethane to attach the polyurethane to the surface of the carbon fiber.

EP 0 339 910 A1

# POLYOXYMETHYLENE RESIN COMPOSITION AND PROCESS FOR THE PREPARATION THEREOF

The present invention relates to a polyoxymethylene resin composition which is excellent not only in mechanical strength and stiffness, but also in resistance to frictional wear, and a process for the preparation of the same. The polyoxymethylene resin composition of the present invention is useful mainly as materials of various mechanical parts or the like.

( Statement of Prior Arts )

A polyoxymethylene resin has, in itself, well-balanced mechanical properties and excellent resistance to frictional wear, so that it has been widely used alone as material for the components of electrical or electronic appliances, automobile devices or other various machines. In some applications, it is also used as a mixture thereof with a fibrous reinforcement such as glass fiber or carbon fiber or a filler in order to further improve the strength, stiffness and resistance to frictional wear thereof.

However, when a polyoxymethylene resin is mixed with carbon fiber to prepare a composite material, shorter carbon fibers are liable to scatter, while longer ones tend to get intertwined to form a pill or knot. Thus, it is difficult to disperse carbon fiber in the resin homogeneously. Further, the carbon fiber cannot exhibit any sufficiently high reinforcing effect, because the adhesion thereof to the resin is poor.

Futhermore, the surface of the carbon fiber sometimes exhibits acidity to cause a problem of degrading the resin at the surface in contact with the fiber. Although treatment of the carbon fiber, such as coating with a silane or epoxy compound, other surface treatment or use of a sizing agent, has been carried out in order to solve these problems, no treatment method which can give a composite material satisfactory in physical properties and can improve the handleability of carbon fiber sufficiently has been established as yet.

(Summary of the Invention)

Under these circumstances, the inventors of the present invention have studied to find out a treatment or sizing agent which can enhance the reinforcing effect of carbon fiber so as to impart excellent mechanical properties to a polyoxymethylene resin and can improve the handleability of carbon fiber and have accomplished the present invention.

Namely, the present invention relates to a polyacetal resin composition which comprises

(A) a polyoxymethylene resin,

(B) 1 to 60% by weight of carbon fiber based on the total amount of the composition and 0.1 to 15% by weight of a polyurethane resin based on the carbon fiber,

and

(C) 0 to 50% by weight of an inorganic filler other than carbon fiber based on the total amount of the composition,

wherein the sum total of the components (B) and (C) is at most 70% by weight of the total amount of the composition,

and a process for the preparation of the same.

The invention provides a polyoxymethylene composition which comprises (A) polyoxymethylene, (B-1) 1 to 60 percent by weight of carbon fiber and (B-2) 0.1 to 15 percent by weight based on the carbon fiber, of a polyurethane, the total amount of (B-1) and (B-2) being not more than 70 percent by weight.

It is preferred that the composition may further comprise (C) up to 50 percent by weight of an inorganic filler other than carbon fiber, the total amount of (B-1), (B-2) and (C) being not more than 70 percent by weight.

The invention moreover provides a process for preparing a polyoxymethylene composition, which comprises the steps of treating carbon fiber with a polyurethane to have the polyurethane attached on the surface of the carbon fiber, mixing the polyurethane-treated carbon fiber with a polyoxymethylene and melting and kneading the mixture.

The process may further comprise a step of mixing an inorganic filler other than carbon fiber with the mixture.

The present invention is characterized by using a specified amount of a polyurethane resin together with carbon fiber, particularly by using carbon fiber containing a specified amount of a polyurethane resin adhering to its surface. According to the present invention, the handling of carbon fiber and the homogeneous dispersion thereof in a polyoxymethylene resin are facilitated owing to this characteristic. Further, the adhesion of carbon fiber to the resin is improved, so that the carbon fiber exhibits a remarkable reinforcing effect to give a material excellent not only in physical and mechanical properties, but also in resistance to frictional wear.

The polyoxymethylene resin (A) to be used as the base in the present invention may be any high-molecular weight compound, the backbone chain of which mainly comprises polyoxymethylene units and includes homopolymers of formaldehyde or its cyclic oligomer, i.e., trioxane or tetraoxane, and copolymers comprising it as a major component and other comonomer. The copolymers include ternary or higher copolymers and graft copolymers having a branched or crosslinked structure. Further, a small amount of other thermoplastic resin may be additionally used beside a polyoxymethylene resin in accordance with the purpose of use.

The thermoplastic resin to be additionally used is not particularly limited and examples thereof include polyolefins such as polyethylene and polypropylene; aromatic polyesters comprising aromatic dicarboxylic acids and diols or hydroxy carboxylic acids, such as polyethylene terephthalate and polybutylene terephthalate; vinyl polymers such as polyacrylonitrile, styrene-acrylonitrile copolymers, polyacrylates, polystyrene and polyvinyl chloride; polyamide, polycarbonate, ABS, polyphenylene oxide, polyphenylene sulfide and fluororesins. These thermoplastic resins may be used also as a mixture of two or more of them.

According to the present invention, the carbon fiber (B) is used together with a specified amount of a polyurethane resin. Although the composition of the present invention may be prepared by merely mixing the two components with the component (A) and melt-extruding the obtained mixture, it is preferably prepared by preliminarily adding a polyurethane resin to carbon fiber to make it adhere to the surface of the fiber, arbitrarily followed by the integration, and blending the resulting carbon fiber with the component (A). The carbon fiber to be used can be prepared by firing an acrylic, rayon or lignin fiber or a fiber made from petroleum or coal pitch and may be of any type selected from among carbonaceous, graphitic and flame-retardant ones. Particularly, it is preferred to use a carbon fiber prepared by firing an acrylic fiber or a fiber made from pitch. The diameter of the carbon fiber is about 4 to 20 μm, preferably about 5 to 15 μm.

According to the present invention, the amount of the carbon fiber used is 1 to 60% by weight, preferably 5 to 50% by weight, based on the total amount of the composition. If the amount is too small, the reinforcing effect will be low, while if it is too large, the preparation of the composition will be troublesome and the fluidity thereof in the molding will be unfavorably low.

The polyurethane resin to be used together with carbon fiber as the components (B) is a thermoplastic one prepared by the reaction of a diisocyanate with a polyol.

Examples of the diisocyanate include tolylene diisocyanate, diphenylmethane diisocyanate, tolylene diisocyanate, hexamethylene diisocyanate and m-xylylene diisocyanate, while those of the polyol include polytetrahydrofuran, 1,4-butanediol and 1,4-butynediol, though the raw materials for the polyurethane resin are not particularly limited.

A polyurethane resin as described above may be added together with carbon fiber in the preparation of the composition to make it adhere to the carbon fiber. Particularly, it is preferable to use carbon fiber containing a polyurethane resin adhering to the surface thereof or a carbon fiber strand integrated with a polyurethane resin. The adhesion or the integration may be carried out by dissolving a polyurethane resin in a solvent such as acetone, dipping a carbon fiber strand in the obtained solution and ridding the resulting strand of the solvent or by preparing an emulsion of a polyurethane resin, dipping carbon fiber in the emulsion and drying the resulting fiber. Thus, although the carbon fiber may be used as a long fiber, it is convenient to add it as a chopped strand having a strand count of 50 to 2000 and a length of 1 to 10 mm.

According to the present invention, the amount of the polyurethane resin used is 0.1 to 15% by weight, preferably 0.5 to 10% by weight, based on the carbon fiber. If the amount is too small, the adhesion of carbon fiber to a polyoxymethylene resin will be hardly improved, while if it is too large, the mechanical properties and heat resistance of the resulting composition will be adversely affected unfavorably.

Although the inorganic filler (C) other than carbon fiber is not necessarily an essential component in the present invention, the addition thereof is preferable for producing a molded article which is excellent in mechanical strengths, heat resistance, dimensional stability (resistance to deformation and warpage), electrical properties and other performances. The inorganic filler (C) may be selected from among fibrous, powdery, granular and flaky ones depending upon the object.

The fibrous filler includes inorganic fibrous materials, for example, glass fiber, asbestos fiber, silica fiber, silica/alumina fiber, alumina fiber, zirconia fiber, boron nitride fiber, silicon nitride fiber, boron fiber, potassium titanate fiber and fibers of metals such as stainless steel, aluminum, titanium, copper or brass. Among them, glass fiber is most representative. Further, the fibrous filler includes high-melting organic fibrous materials, and particular examples thereof include polyamides, fluororesins and acrylic resins.

The powdery or granular filler includes carbon black, graphite, silica, quartz powder, glass beads, glass balloons, glass powder, silicates such as calcium silicate, aluminum silicate, kaolin, talc, clay, diatomaceous earth and wollastonite; metal oxides such as iron oxides, titanium oxide, zinc oxide, antimony trioxide and alumina; metal carbonates such as calcium carbonate and magnesium carbonate; metal sulfates such as calcium sulfate and barium sulfate; ferrite, silicon carbide, silicon nitride, boron nitride and various metal powders.

The flaky filler includes mica, glass flake and various metal foils.

These inorganic fillers may be used alone or as a mixture of two or more of them. The simultaneous use of carbon fiber with a granular or flaky filler is particularly effective in producing an article which is excellent not only in basic strengths but also in dimensional accuracy and electrical properties.

If necessary, a coupling agent or surface treatment is preferably used together with these fillers. Although it is a matter of course that a polyurethane resin is preferably used as the coupling agent or surface treatment for the component (C), the coupling agent or surface treatment need not be limited thereto.

The amount of the inorganic filler (C) is at most 50% by weight based on the total amount of the composition. Further, the amount is restricted also by the amount of the carbon fiber (B) used, so that the sum total of the components (B) and (C) must be at most 70% by weight, preferably 10 to 60% by weight, based on the total amount of the composition.

Further, the composition of the present invention may suitably contain an additive which is conventionally added to a thermoplastic or thermosetting resin, depending upon the performance required. Examples of such an additive include stabilizers such as antioxidant and ultraviolet absorber, antistatic agent, flame retardant, coloring agent such as dye and pigment, lubricant, crystallization accelerator (nucleating agent).

The polyoxymethylene resin composition of the present invention can be prepared by a conventional process for the preparation of a synthetic resin composition and with conventional equipment therefor. Namely, necessary components are mixed and kneaded and extruded with a single- or twin-screw extruder to give a pellet. In the preparation, a part of the necessary components may be mixed, as a master batch, with the residual part thereof, followed by molding. Alternatively, in order to facilitate the dispersion and mixing of necessary components, a part or the whole of the resin may be preliminarily ground, followed by mixing and extrusion. As described above, it is particularly preferred to prepare the composition by using carbon fiber which has been preliminarily surface-treated or integrated with a polyurethane resin. In order to obtain a preferred composition, the carbon fiber to be dispersed in the composition must have an average fiber length of 0.03 to 10 mm, preferably 0.1 to 10 mm. The fiber length can be adjusted by selecting the raw materials and the conditions for the preparation of the composition.

(Effect of the Invention)

As described above, the present invention is characterized by blending carbon fiber together with a polyurethane resin, particularly in a sate preliminarily surface treated with it, with a polyoxymethylene resin. Owing to this characteristic, the present invention provides a carbon fiber-containing polyoxymethylene resin composition which is improved in various physical properties such as mechanical strength and is more excellent in resistance to frictional wear and can be more easily prepared and processed than the carbon fiber-containing polyoxymethylene resin compositions of the prior art.

(Example)

The present invention will now be described in more detail by referring to the following Examples, though it is not limited by them at all.

Example 1

80 parts by weight of a polyoxymethylene copolymer (Duracon M-90, mfd. by Polyplastics Co., Ltd.) was mixed with 17 parts by weight of a chopped carbon fiber (diameter: 7 μm) prepared by firing an acrylonitrile fiber to carry out the surface oxidation thereof and cutting the resulting fiber into a length of 6 mm and 3% by weight of a thermoplastic polyurethane resin to prepare a mixture. This mixture was kneaded and extruded with an extruder into a pellet. This pellet was injection-molded into a test piece. This test piece was examined for physical properties according to ASTM. Further, the test piece was examined for abrasion wear by using a metal (S55C) as a mating material under the conditions of a load of 10 kg/cm$^2$ and a linear speed of 300 mm/sec with an abrasion tester of Suzuki type. The results are shown in Table 1.

Example 2

A polyoxymethylene resin composition pellet was prepared by using the same raw materials as those used in Example 1 in the same amounts as those used in Example 1, except that the carbon fiber was one preliminarily integrated with the thermoplastic polyurethane resin prior to the blending thereof with the residual component. In a similar manner to the one described in Example 1, this pellet was molded into a test piece, followed by the examination of the test piece. The results are shown in Table 1.

In this Example, the handleability of the chopped carbon fiber was excellent and the extrusion and molding of the composition could be easily and smoothly carried out.

Comparative Example 1

A pellet was prepared by repeating the same procedure as that described in Example 2 except that the thermoplastic polyurethane resin was replaced by an epoxy resin. This pellet was molded into a test piece and the physical properties of the test piece were determined. The results are shown in Table 1.

Comparative Example 2

The same procedure as the one described in Example 2 was repeated except that the thermoplastic polyurethane resin was replaced by a polyamide resin. The result are shown in Table 1.

Comparative Example 3

The same procedure as the one described in Example 1 was repeated except that no thermoplastic polyurethane resin was used. The carbon fiber was poor in integrity to cause troubles in handling. Further, the feed opening of the extruder was frequently clogged to result in uneven extrusion. For caution's sake, the results of the examination of a test piece made of the obtained pellet for physical properties are shown in table 1.

Comparative Example 4

A pellet was prepared by repeating the same procedure as the one described in Example 2 except that a chopped glass fiber (length: 3 mm) integrated with a polyurethane resin was used instead of the integrated carbon fiber. This pellet was molded into a test piece and the test piece was examined for physical properties in a similar manner to the one described in Example 2. The results are shown in Table 1.

Table 1

| | Ex. 1 | Ex. 2 | Comp. Ex. 1 | Comp. Ex. 2 | Comp. Ex. 3 | Comp. Ex. 4 |
|---|---|---|---|---|---|---|
| Fibrous reinforcement | carbon fiber | do. | do. | do. | do. | glass fiber |
| Additive or coupling agent | thermoplastic polyurethane | thermoplastic polyurethane | epoxy resin | polyamide | none | thermoplastic polyurethane |
| Tensile strength (kgf/cm$^2$) | 1505 | 1850 | 970 | 880 | 760 | 1280 |
| Flexural strength (kgf/cm$^2$) | 1880 | 2880 | 1240 | 1170 | 1100 | 2075 |
| Flexural modulus (kgf/cm$^2$) | 132,000 | 139,700 | 127,300 | 123,000 | 125,300 | 102,000 |
| Izod impact strength (notched, kgfcm/cm) | 6.8 | 9.0 | 4.7 | 4.3 | 4.3 | 7.6 |
| Abrasion wear ( m$^3$/kg·km) | test material: 3.34 x 10$^{-2}$ | test material: 3.09 x 10$^{-2}$ | test material: 4.33 x 10$^{-2}$ | test material: 4.12 x 10$^{-2}$ | test material: 4.91 x 10$^{-2}$ | test material: 20.31 x 10$^{-2}$ |
| | mating material: 0.02 x 10$^{-2}$ | mating material: 0.02 x 10$^{-2}$ | mating material: 0.02 x 10$^{-2}$ | mating material: 0.02 x 10$^{-2}$ | mating material: 0.02 x 10$^{-2}$ | mating material: 1.9 x 10$^{-2}$ |

Examples 3 to 5

In a similar manner to the one described in Example 2, a polyoxymethylene resin composition pellet having the formulation given in Table 2 was prepared by using a chopped carbon fiber integrated with 5% by weight of a thermoplastic polyurethane and having a length of 6 mm. This pellet was molded into a test piece and the test piece was examined for physical properties in a similar manner to the one described in Example 2. The results are shown in Table 2.

Comparative Examples 5 to 7

The same procedure as the one described in Examples 3 to 5 was repeated except that untreated carbon fiber was used instead of the integrated chopped fiber. Thus, pellets of compositions corresponding to those of Examples 3 to 5 were obtained. Although the pelletizing could not proceed smoothly and a pellet was obtained only with difficulty, a test piece was made of this pellet and examined for physical properties. The results are shown in Table 2.

Table 2

|  | Ex. 3 | Comp. Ex. 5 | Ex. 4 | Comp. Ex. 6 | Ex. 5 | Comp. Ex. 7 |
|---|---|---|---|---|---|---|
| Glass fiber (%) | - | - | 20 | 20 | - | - |
| Calcium carbonate (%) | - | - | - | - | 20 | 20 |
| Carbon fiber (%) | 15 | 15 | 20 | 20 | 20 | 20 |
| Polyurethane treatment | used | unused | used | unused | used | unused |
| Tensile strength (kgf/cm$^2$) | 1570 | 720 | 2060 | 1490 | 1320 | 1080 |
| Flexural strength (kgf/cm$^2$) | 2390 | 1030 | 2730 | 2230 | 2210 | 1730 |
| Flexural modulus (kgf/cm$^2$) | 113,000 | 110,900 | 169,000 | 163,000 | 156,000 | 153,000 |
| Izod impact strength (notched, kgfcm/cm) | 7.5 | 4.1 | 11.9 | 9.0 | 6.3 | 4.3 |

Examples 6 and 7

A carbon fiber-containing polyoxymethylene composition pellet was prepared by the use of a chopped fiber prepared by integrating pitch carbon fiber (diameter: 11 $\mu$m, 20% by weight based on the total amount of the composition) with 1% by weight or 10% by weight of a thermoplastic polyurethane and having a length of 3 mm. A test piece was made of the pellet and examined for physical properties in a similar manner to the one used in the above Examples. The results are shown in Table 3.

Comparative Examples 8 and 9

A carbon fiber-containing polyoxymethylene composition pellet was prepared by repeating the same procedure as the one described in Examples 6 and 7 except that the pitch carbon fiber was integrated with 1% by weight of an epoxy resin instead of the polyurethane resin or was untreated. The physical properties thereof are shown in Table 3.

Table 3

|  | Ex. 6 | Ex. 7 | Comp. Ex. 8 | Comp. Ex. 9 |
|---|---|---|---|---|
| Coupling agent | thermoplastic polyurethane (1% by weight) | thermoplastic polyurethane (10% by weight) | epoxy resin (1% by weight) | none |
| Tensile strength (kgf/cm$^2$) | 1247 | 1208 | 788 | 753 |
| Flexural strength (kgf/cm$^2$) | 1782 | 1763 | 1329 | 1295 |
| Flexural modulus (kgf/cm$^2$) | 72,900 | 72,200 | 72,300 | 70,800 |
| Izod impact strength (notched, kgfcm/cm) | 6.3 | 6.9 | 4.7 | 4.3 |

## Claims

1. A polyoxymethylene composition which comprises
(A) polyoxymethylene,
(B-1) 1 to 60% by weight, based on the total weight of the composition, of carbon fiber, and
(B-2) 0.1 to 15% by weight, based on the carbon fiber, of a polyurethane,
the total weight of (B-1) and (B-2) being not more than 70% of the total weight of the composition.

2. A polyoxymethylene composition as claimed in claim 1, which further comprises
(C) up to 50% by weight, based on the total weight of the composition, of an inorganic filler other than carbon fiber,
the total weight of (B-1), (B-2) and (C) being not more than 70% of the total weight of the composition.

3. A polyoxymethylene composition as claimed in claim 1 or claim 2, in which the carbon fiber(B-1) is of a type prepared by firing an acrylic fiber or a fiber made from pitch.

4. A polyoxymethylene composition as claimed in any preceding claim, in which the carbon fiber(B-1) has a diameter of about 4 to 20 $\mu$m and an average fiber length of 0.03 to 10mm.

5. A polyoxymethylene composition as claimed in claim 4, in which the carbon fiber(B-1) has a diameter of about 5 to 15 $\mu$m and an average fiber length of 0.1 to 10mm.

6. A polyoxymethylene composition as claimed in any preceding claim, in which the weight of carbon fiber(B-1) is 5 to 50% of the total weight of the composition.

7. A polyoxymethylene composition as claimed in any preceding claim, in which the carbon fiber(B-1) has the polyurethane(B-2) adhering to its surface or is in the form of a strand impregnated with the polyurethane(B-2).

8. A polyoxymethylene composition as claimed in any preceding claim, in which the weight of the polyurethane(B-2) is 0.5 to 10%, based on the weight of carbon fiber(B-1).

9. A process for preparing a polyoxymethylene composition, which comprises the steps of treating carbon fiber with a polyurethane so as to attach the polyurethane to the surface of the carbon fiber, mixing the polyurethane-treated carbon fiber with a polyoxymethylene and melting and kneading the mixture.

10. A process as claimed in claim 9, which further comprises a step of mixing an organic filler other than carbon fiber with the mixture.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 302 012 (TOHO BESLON CO. LTD.) * claims 1,2,4,5,7; page 8, lines 14-29; page 11, line 27; page 13, lines 10-13 * | 1,3-10 | C 08 K 9/08<br>C 08 K 7/06<br>C 08 L 59/02 |
| Y | | 1-10 | |
| Y | EP-A-0 247 765 (POLYPLASTICS CO. LTD.) * claim 1; column 4, line 46 - column 5, line 8 * | 1-10 | |

TECHNICAL FIELDS
SEARCHED (Int. Cl.4)

C 08 L
C 08 K

The present search report has been drawn up for all claims

| Place of search | Date of completion of the search | Examiner |
|---|---|---|
| BERLIN | 14-07-1989 | VOIGTLAENDER R O J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P0401)